(19) Europäisches Patentamt / European Patent Office / Office européen des brevets

(11) **EP 4 016 350 A1**

(12) **EUROPEAN PATENT APPLICATION**

(43) Date of publication:
**22.06.2022 Bulletin 2022/25**

(21) Application number: **20214383.0**

(22) Date of filing: **15.12.2020**

(51) International Patent Classification (IPC):
**G06F 21/60** (2013.01)    **G06F 7/58** (2006.01)
**H04L 9/08** (2006.01)    **G01J 1/02** (2006.01)

(52) Cooperative Patent Classification (CPC):
**G06F 7/58; G06F 21/602; H04L 9/0662;**
**H04L 9/0852; H04L 9/0869;** G01J 1/0228

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ID QUANTIQUE SA**
**1227 Genève (CH)**

(72) Inventors:
• **CHOI, Jeong Woon**
  **13963 Gyeonggi-do (KR)**
• **RIBORDY, Grégoire**
  **1256 Troinex (CH)**
• **BUSSIÈRES, Félix**
  **1234 Vessy (CH)**

(74) Representative: **KATZAROV S.A.**
**Geneva Business Center**
**12 Avenue des Morgines**
**1213 Petit-Lancy (CH)**

(54) **RANDOM NUMBER GENERATOR DIAGNOSIS METHOD**

(57) The present invention relates to an entropy measurement method comprising the steps of a start-up phase comprising powering on the entropy source unit, a signal emitting step comprising emitting a quantum signal characterized by an overall noise made of classical noise and quantum noise, a noise measurement step comprising measuring the statistics of overall noise through active pixels upon illumination and the statistics of classical noise through non-illuminated pixels, a quantum noise calculation step comprising calculating the quantum noise based on the difference between the overall noise and the classical noise, an health check step comprising comparing the resulting quantum noise to an expected quantum noise and/or a predetermined threshold and a health control step controlling the entropy source unit based on the result of the entropy estimation step.

Figure 2

EP 4 016 350 A1

**Description**

**Technical Field**

The present invention relates to a method for diagnosing the functioning of a random number generator, more particularly for estimating the entropy of the RNG in real time, and even more particularly for health check of random number generators.

**Background of the art**

In general, the present invention is in the context of the generation of random numbers. Many tasks in modern science and technology make use of random numbers, including simulation, statistical sampling, gaming applications, and cryptography, both classical and quantum. A good random number generator should produce a sequence of bits with high entropy at a high rate. By high entropy, it is meant that nobody can predict the value of the bit before the bit is revealed, entropy can also be understood as randomness. This is an essential requirement in most of the modern cryptographic algorithms and protocols. Indeed, all the cryptography protocols commonly employed, such as DSA-, RSA- and Diffie-Hellman-algorithms, follow Kerckhoffs' principle, which dates back to the 19th century, and states that the security of a cypher must reside entirely in the key, i.e. in the random sequence used as secret, which is fully unpredictable. It is therefore of particular importance that the key used in a cryptographic algorithm is secure, which in practice requires it to be chosen perfectly at random, i.e. randomly generated.

Nowadays many types of true random number generators are commercially used. In cryptography, the term "true random" is used for emphasizing that a random number generator produces a real, genuine random bits, not pseudo-random or random looking bits. Currently, if a random number generator has a good physical entropy source and a good extraction method, the security of which is supported by theoretical evidences, then they can be called a true random number generator. They use their own physical entropy source which generates unpredictable random signal or bit sequences. However, the physical entropy generation principle is complex and not clear and it is hard to make a proper estimation of the quality of the entropy provided.

In addition, besides the main entropy noise generated by the entropy generation principle, the entropy output is also affected by various additional noises, e.g. from physical or electronic components which cumulates with the other noise. The additional noises can be deterministic, i.e. predictable, or out of control, or even beyond interpretation so as to render the entropy measurement impossible. Therefore, for a proper entropy estimation it is better to minimize or remove the contribution of these additional noises.

Furthermore, in order to provide a good random number generator, i.e. a 'secure' and 'real random and of high entropy' RNG, it is important to detect an entropy quality drop or failure immediately when it occurs so as to be able to correct it as soon as possible. The most common way to handle this is to apply statistical health check functions such as "repetition count test" and "adaptive proportion test" in the NIST SP800-90B as explained in "Recommendation for the Entropy Sources Used for Random Bit Generation", Turan et al. January 2018. Such health functions detect a statistical anomaly by checking if less typical or improbable bit sequences occur continuously or often.

However, for Random Number Generators provided with an entropy source that is anyway able to generate patterns which are not too big bias or well-mixed or random-looking, for any reasons, then this statistical method is not able to detect the entropy failure.

Therefore, in order to recognize the entropy quality drop, additional treatment, such as a real-time entropy estimation by monitoring various parameters of physical components or other signatures which can prove the entropy quality, is necessary. Such that to enhance security, the entropy output is transmitted to the next steps, for example, a post-processing or user applications, only when the statistical test and the entropy estimation give an acceptable entropy measurement.

Most of commercial random number generators are not able to compute the entropy amount in real time but they only apply the above-mentioned statistical health check functions as requested in the cryptographic standards. Some advanced random number generators like quantum random number generators enable to measure the actual entropy amount based on the entropy generation principle. However, due to the complexity of the entropy generation theory and implementation, the entropy computation takes a long period of time and impedes the real-time measurement. Indeed, usually in order to check the entropy quality, it is required to use bulk external devices to analyze the signal, noises and the current status of various components. Mostly, this is only available in the lab and after deployment a real-time entropy estimation usually is not allowed.

In particular, the patent US20180260192, "Device and method for managing performance of quantum noise-based random number generator" shows a conventional calibration method of the light and the CMOS Image Sensor for maintaining the entropy quality. Specifically, it is described that first the light is turned off, then the classical noise level is measured and finally the level of the classical noise is adjusted by controlling different electronic components, such as the Analog-to-Digital Converter offset, the analog gain, the exposure time and the like.

According to this prior art, the level of the classical noise in the Quantum Random Number Generator is measured only for lifting up the Analog-to-Digital Converter offset in such a way to not to see the classical noise anymore. However, classical noises are already mixed into the input signal prior to the Analog-to-Digital Converter and thus lifting up the Analog-to-Digital Converter offset does not reduce classical noise nor make quantum noise dominant.

There is therefore a need to calculate the additional statistics, i.e. not only the mean but also the variance, of the classical noise of a Random Number Generator and use it for computing the quantum entropy of the Random Number Generator.

In this regard, a primary object of the invention is to solve the above-mentioned problems and more particularly to provide an efficient way of estimating the quantum entropy by minimizing or removing the contribution of additional classical noises, and provide a diagnosis or health check method, which is based on a real-time entropy estimation in addition to a statistical health test.

In addition, the present invention also provides an effective way to reduce the classical noise contribution while remaining the quantum noise contribution dominant, instead of finishing the entropy generation when the classical noise contribution is high.

## Summary of the invention

The present invention provides an efficient way to calculate a pure quantum entropy in real time and then use this information for checking if the physical entropy source generates sufficient entropy. In addition, the present invention provides an efficient way to reduce classical noise contribution to the entropy and make quantum noise contribution to the entropy dominant.

A first aspect of the invention relates to an entropy measurement method comprising the steps of a start-up phase comprising powering on the entropy source unity, a signal emitting step comprising emitting a quantum signal characterized by an overall noise made of classical noise and quantum noise, a noise measurement step comprising measuring the statistics of overall noise through active pixels upon illumination and the statistics of classical noise through non-illuminated pixels, a quantum noise calculation step comprising calculating the quantum noise based on the difference between the overall noise and the classical noise, an entropy estimation step comprising comparing the resulting quantum noise to an expected quantum noise and/or a predetermined threshold, and a health check step controlling the entropy source unit based on the result of the entropy estimation step.

Advantageously, the classical noise detection step comprises detecting said classical noise through at least one optical dark pixel.

In such manner the classical noise and the overall noise are preferably detected simultaneously.

Alternatively, the classical noise detection step comprises periodically turning on and off the light source and detecting said classical noise through at least one active pixel when the light is turned off.

In this case, the entropy measurement method preferably comprises a memorizing step comprising storing the statistics of the photon detection in a memory during the light switch-off, until the classical noise statistics are obtained.

Preferably, if a small quality drop is measured, the health check step indicates the entropy amount to the user and check the next samples.

According to a preferred embodiment of the present invention, if a quality drop beyond a predetermined threshold is measured, the health check step blocks the output of corresponding entropy bits, indicate the entropy amount to the user and checks the next samples

Advantageously, if a continuous quality drop above the threshold is measured, the health check step detects a total failure and blocks the output of the corresponding entropy bits and restart/reset the quantum entropy source

According to a preferred embodiment of the present invention, if a continuous quality drop above the threshold is measured even after the restart, the health check detects a repeated total failure and informs that the system is at the end of life.

Preferably, the at least one ODP is one pixel or a pixel array of multiple pixels.

Advantageously, the entropy measurement method further comprises an additional noise measurement and minimization step where the noises are originated from the group comprising after-pulse noise, additional digitization process, format or unit converting and the like.

Preferably, the entropy measurement method further comprises an ADC sensitivity modulation step comprising adapted to reduce the sensitivity of the ADC when the statistics of the classical noise are above a predetermined threshold.

According to a preferred embodiment of the present invention, the ADC sensitivity modulation step can occur before or after the entropy estimation step.

Advantageously, the method of the present invention provides the information on whether or not the entropy amount and/or entropy level have passed or failed the test and continue or not the next steps for the generation of the true random numbers.

Preferably, the method of the present invention is applied to all quantum random number generators using as entropy generation principle the quantum shot noise of the light.

According to a preferred embodiment of the present invention, it is possible to compute the statistics of the quantum entropy signal and the classical noise at the same time and separately.

Thanks to the present invention, the statistics measured for the quantum and the classical signals allows to obtain the actual quantum entropy amount and detect the quantum entropy failure in real time.

Thanks to the present invention, it is easy to manage the entire classical noise level by controlling the sensitivity of the Analog-to-Digital Converter.

**Brief description of the drawings**

Further particular advantages and features of the invention will become more apparent from the following non-limitative description of at least one embodiment of the invention which will refer to the accompanying drawings, wherein

- Figures 1a and 1b represent two embodiments of the detectors used to detect and measure classical noise together with overall noise during the method of the present invention.
- Figure 2 represents a preferred embodiment of the present invention.

**Detailed description of the invention**

The present detailed description is intended to illustrate the invention in a non-limitative manner since any feature of an embodiment may be combined with any other feature of a different embodiment in an advantageous manner.

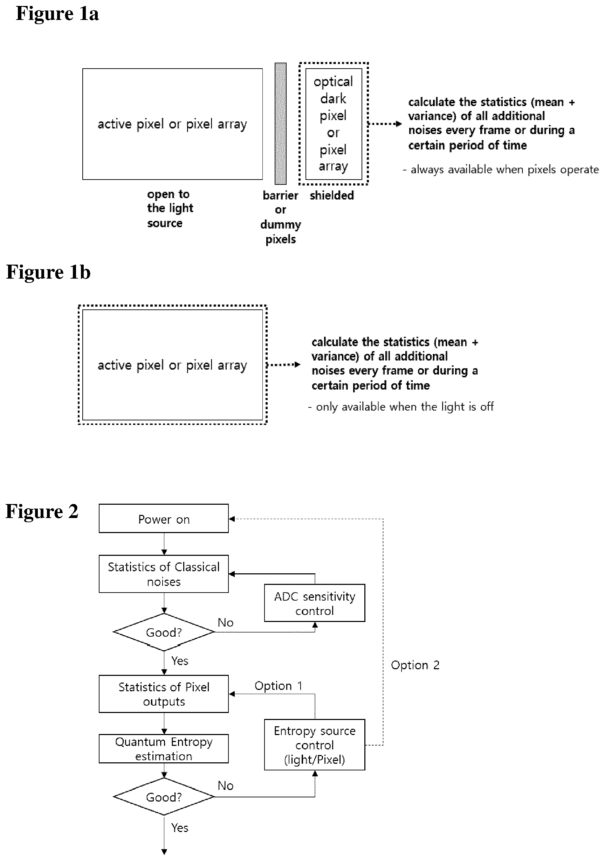

The main aspect of the invention is to measure/detect classical noise's statistics. In order to do this one has to read only the classical noise signal which is not affected by light illumination. To achieve this, the invention comprises two alternatives. The first one is to use shielded optical dark pixels which are additionally put in place as shown in Fig. 1a. In this case one can operate these pixels together with active pixels at the same time. Therefore, it is possible to get the overall noise (quantum + classical) statistics from active pixels and the classical noise statistics from optical dark pixels at the same time. Alternatively, that there are no such optical dark pixels and one periodically turns on and off the light source. During the time of light on, one gets the overall noise statistics. During the time of light off, one gets the classical noise statistics. Both are obtained from the active pixels.

Figure 1a and 1b show two embodiments of the detectors used to detect and measure classical noise during the entropy measurement method of the present invention.

Figure 1a shows the first embodiment where one uses at least one pixel, called optical dark pixel (ODP) which is shielded so as to be not exposed to the light and Figure 1b shows to operate active pixels while periodically turning off the light source. Both alternatively permit to measure the classical noise.

The important aspect of the invention here is that when one measures classical noises statistics, it is necessary to make no light touch pixels. In this regard two alternatives are possible, the first in 1a is the case that additional well-shielded ODPs are put in place together with active pixel array. It is possible to measure the classical noise statistics from ODPs without turning off light and thus at the same time active pixels can generate entropy bits based on the photon number fluctuation. Alternatively, in figure 1b no ODPs are present, therefore, to measure classical noises statistics we need to periodically turn off the light so as to measure the classical noise only.

More particularly, according to the first embodiment of the present invention shown in Figure 1a, at least one optical dark pixel is operated together with the active pixels at the same time.

The ODP can be one pixel or a pixel array of multiple pixels. They are usually placed next to dummy pixels and covered by metal shield. The physical operation is the same to the normal operation of pixels in the CIS. All outputs of them are given to the ADC according to the read-out clock management. Therefore, a function for the ODP can gather these outputs and compute the mean and the variance of classical noises. Another function for the active pixel array will gather the outputs and compute the mean and the variance of overall (quantum and classical) noises in the same manner.

According to the way to read-out pixel outputs, the outputs of each active pixel and each optical dark pixel in a whole frame can be transferred sequentially or in parallel. When there is one ADC placed in the CIS module, then all those pixel outputs should be transferred to the ADC sequentially. However, if there are multiple ADCs, then they can be disposed in parallel. In any cases, in order to get the statistics of active pixel outputs and optical dark pixels, a sufficient number of outputs need to be counted. Therefore, depending on the number of pixels in the active array and the ODP array, a part of frame, a single frame or multiple frames should be used.

Optical dark pixels refer to pixels that are shielded from radiation that is incident upon a surface of an optical sensor. An optical dark pixel is a photo-diode in a shielded zone as shown in Figure 1a. The pixel itself is exactly the same to others in active zone. However, by a metallic shielding (or the like) on the top side and the dummy pixels, photons cannot reach ODPs so that the ODPs only output classical noise value.

In this way, it is not necessary to turn off the light for measuring the classical noise outputs.

Indeed, the digitized outputs of the optical dark pixel represent the level of the entire additional classical noises from the electronic components including the Analog-to-Digital Converter noise as well as analogue signals before the ADC containing classical noises such as dark noises on the pixel, read-out noise on the circuit, crosstalk between circuits. In addition, during the digitization process, the ADC make additional electric noises and digitization distortions. By reading these outputs, various statistics for the entire classical noise are obtained. By various statistic, it is meant the mean and the variance.

In particular, by subtracting the statistics of the ODPs which only contain classical noises, from the statistics of the active pixels' outputs, an estimation of the quantum entropy can be derived. Such estimation represents the entropy given only by the light source, representing a more correct estimation.

It is important to note that the active pixel outputs are the ADC digitization for the convolution of quantum signal and classical noise signal.

If the statistics of the classical noise are too high, or higher than their thresholds, the sensitivity of the ADC can be reduced. The thresholds are not fixed, one can set the thresholds for the mean and the variance of the classical noises output from the ODPs in order to maintain the influence of classical noises negligible. The bigger variance always implies the bigger entropy. However, as mentioned before, the classical noises might not be random but just look random. Therefore, the fluctuation of classical noises should preferably be maintained as low as possible under a certain threshold. Such reduction is obtained by enlarging the input voltage range of the ADC, in this way the classical noise signal becomes weakened and squeezed with this setting. Consequently, the statistics gets smaller. In this scenario, the fluctuations of the quantum signal should be kept at a value high enough to provide good randomness even in this less sensitivity of the ADC. This can be realized by increasing the intensity of light. (See also the prior art previously mentioned.)

After the above, if the classical noise level is within an acceptable level, the entropy estimation phase can start. To simplify, it is assumed that the digitized quantum and the classical noises follow a normal distribution and they are independent of each other. From the outputs of active pixels and the ODPs, the mean and the variance of the pixels outputs ($E_{pixel}$, $V_{pixel}$) and of the classical noises ($E_{ODP}$, $V_{ODP}$) will be computed as reported in the following.

By considering that

$$E_{pixel} = E_{Quantum} + E_{Classical,}$$

$$V_{pixel} = V_{Quantum} + V_{Classical,}$$

$$E_{ODP} = E_{Classical,}$$

and

$$V_{ODP} = V_{Classical,}$$

The following can be derived:

$$E_{Quantum} = E_{pixel} - E_{ODP} \text{ and } V_{Quantum} = V_{pixel} - V_{ODP}.$$

Based on ($E_{Quantum}$, $V_{Quantum}$), the entropy of the quantum signal is eventually computed.

Once the ($E_{Quantum}$, $V_{Quantum}$) is calculated, a probability distribution can be derived, and the entropy can be computed. More particularly, for given E and V, one can get the probability distribution {p_i}, based on which one can compute the Shannon entropy, H=sum_i-p_i*log_2(p_i), or the min-entropy, H=-log_2(p_max).

For the practical efficiency, only meaningful p_i are taken into account. For example, negligible probabilities less than 10^-1 or 10^-2 are ignored in this calculation. The entropy so obtained is compared with a predefined threshold value to check its quality.

Generally speaking, the predefined threshold for the entropy per bit should be set by the quality of physical entropy source measured by a long-term test and also by how much entropy should be requested at minimum. By a long-term test, one can find a reliable range of the entropy per bit. For example, if the physical entropy source generates the entropy per bit greater than 0.9 in most of time, then the threshold could be 0.9 or less. Considering the case that the quality of physical entropy gets gradually worse but still generate the entropy good enough for any requirement, for example, 0.5, then one can set the second threshold in between 0.9 and 0.5. These layered thresholds should be set accordingly by alarm severities, for example, weak, instant, strong, permanent, and the like.

Alternatively, the predefined threshold value can be set directly on the pair ($E_{Quantum}$, $V_{Quantum}$), instead of on the entropy value itself.

Depending on the measured entropy, the health check function can be set to perform different levels of check, as indicated in the list below.

1. If a normal or small quality drop is measured, the health check just indicates the entropy amount and check the next samples

2. If a quality drop beyond a threshold is measured, the health check blocks the output of corresponding entropy bits, indicate the entropy amount and checks the next samples after adjusting the light intensity and the exposure time of pixels (as shown as option 1 of figure 2)

3. If a continuous quality drop above the threshold (total failure) is measured, the health check blocks the output of the corresponding entropy bits and either applies option 1 of figure 2 again and when failure continues, restart/reset the quantum entropy source as shown as option 2 in figure 2, or applies option 2 directly

4. If a continuous quality drop above the threshold is measured even after the restart (repeated total failure), the health check informs that the system is at the end of life.

Alternatively, it is also possible to put several thresholds in order to define multiple types of failures (weak, strong, instant and the like) and the corresponding reactions.

Alternatively, as shown in figure 1b, in case that an optical dark pixel is not available, it is possible to operate the active pixels while periodically turning off the light source.

When the light source is turned off, the same procedure as described above can be applied to measure the classical noise statistics. As a matter of fact, without ODPs, to get E_quantum and V_quantum, one has to know E_pixel, V_pixel and E_classical, V_classical. The former and the latter should be computed with and without light, respectively. For this reason, the light is alternatively turned on and off.

However, in this case, in order to estimate the quantum entropy, it is necessary to store the statistics of the photon detection in a memory until the classical noise statistics are obtained, as they require the light to be switched off. Once the statistics of the photon detection are measured for both the quantum and classical regimes, the entropy estimation will be calculated and used as described above.

In conclusion, to measure the classical noise statistics, one has to read pixel outputs with no effect of light on pixels. If ODPs are available, then one can do this without turning off the light, that is, still running the active pixels, since the ODPs are all shielded, and thus only classical noises affect on the ODPs output. However, if there is no additional ODP, the alternative is to turn off the light for a while and read outputs from the active pixels to see the classical noise statistics.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

**Claims**

1. Entropy measurement method comprising the steps of:

a start-up phase comprising powering on the entropy source unity,

a signal emitting step comprising emitting a quantum signal **characterized by** an overall noise made of classical noise and quantum noise,

a noise measurement step comprising measuring the statistics of overall noise through active pixels upon illumination and the statistics of classical noise through non-illuminated pixels,

an entropy estimation step comprising calculating the quantum noise based on the difference between the overall noise and the classical noise,

a health check step comprising comparing the resulting quantum noise to an expected quantum noise and/or a predetermined threshold, and

a health control step controlling the entropy source unit based on the result of the entropy estimation step.

**2.** Entropy measurement method according to claim 1, **characterized in that** the classical noise detection step comprises detecting said classical noise through at least one optical dark pixel.

**3.** Entropy measurement method according to claim 1 or 2, **characterized in that** the classical noise and the overall noise are detected simultaneously.

**4.** Entropy measurement method to claim 1, **characterized in that** the classical noise detection step comprises periodically turning on and off the light source and detecting said classical noise through at least one active pixel when the light is turned off.

**5.** Entropy measurement method according to claim 4, **characterized in that** it further comprises a memorizing step comprising storing the statistics of the photon detection in a memory during the light switch-off, until the classical noise statistics are obtained.

**6.** Entropy measurement method according to any one of claims 1 to 5, **characterized in that** the entropy estimation step comprises computing the entropy amount from its mean E_quantum and its Variance V_quantum.

**7.** Entropy measurement method according to claim 6, **characterized in that** the entropy estimation step comprises using E_quantum and V_quantum directly to check if the entropy source generates a good entropy.

**8.** Entropy measurement method according to claim 6 or 7, **characterized in that** E_quantum and V_quantum are calculated through the formulas:

$$E\_quantum = E\_pixel - E\_classical,$$

$$V\_quantum = V\_pixel - V\_classical$$

Where E_classical and V_classical are obtained through the detection of the classical noise measurement step by the optical dark pixel and/or active pixel when the light is turned off.

**9.** Entropy measurement method according to any one of claims 1 to 8, **characterized in that** if a small quality drop is measured, the entropy amount is indicated to the user and the next samples is checked.

**10.** Entropy measurement method according to any one of claims 1 to 8, **characterized in that** if a quality drop beyond a predetermined threshold is measured, the output of corresponding entropy bits is blocked, the entropy amount is indicated to the user and the next samples are checked after adjusting the light intensity and the exposure time of pixels.

**11.** Entropy measurement method according to any one of claims 1 to 8, **characterized in that** if a continuous quality drop above the threshold is measured, a total failure is detected, the output of the corresponding entropy bits is blocked and either the light intensity and the exposure time of pixels are adjusted again and when failure continues, the quantum entropy source is restarted, or the quantum entropy source is restarted directly.

**12.** Entropy measurement method according to any one of claims 1 to 8, **characterized in that** if a continuous quality drop above the threshold is measured even after the restart, a repeated total failure is detected, and the user is informed that the system is at the end of life.

**13.** Entropy measurement method according to any one of claims 1 to 12, **characterized in that** the at least one non-illuminated pixel is one pixel or a pixel array of multiple pixels.

**14.** Entropy measurement method according to any one of claims 1 to 13, **characterized in that** it further comprises an ADC sensitivity modulation step comprising adapted to reduce the sensitivity of the ADC when the statistics of the classical noise are above a predetermined threshold.

**15.** Entropy measurement method according to claim 14, **characterized in that** it the ADC sensitivity modulation step can occur before or after the entropy estimation step.

## Figure 1a

active pixel or pixel array

open to
the light
source

barrier
or
dummy
pixels

optical
dark
pixel
or
pixel
array

shielded

calculate the statistics (mean +
variance) of all additional
noises every frame or during a
certain period of time

- always available when pixels operate

## Figure 1b

active pixel or pixel array

calculate the statistics (mean +
variance) of all additional
noises every frame or during a
certain period of time

- only available when the light is off

## Figure 2

Power on

Statistics of Classical
noises

Good?

No → ADC sensitivity
control

Yes

Statistics of Pixel
outputs

Option 1

Quantum Entropy
estimation

Entropy source
control
(light/Pixel)

Good?

No

Yes

Option 2

Europäisches
Patentamt

European
Patent Office

Office européen
des brevets

# EUROPEAN SEARCH REPORT

Application Number

EP 20 21 4383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 399 405 A1 (SK TELECOM CO LTD [KR]) 7 November 2018 (2018-11-07) * figure 2 * * figure 3 * * figure 5 * * paragraph [0038] - paragraph [0042] * * paragraph [0046] - paragraph [0051] * * paragraph [0056] - paragraph [0061] * * paragraph [0104] - paragraph [0108] * * paragraph [0143] - paragraph [0147] * * paragraph [0161] - paragraph [0163] * ----- | 1-15 | INV. G06F21/60 G06F7/58 H04L9/08 G01J1/02 |
| Y | WO 2020/177848 A1 (HUAWEI TECH DUESSELDORF GMBH [DE]) 10 September 2020 (2020-09-10) * figure 2 * * page 16, line 6 - line 12 * * page 17, line 20 - line 23 * * page 19, line 14 - line 19 * ----- | 1-15 | |
| Y | CN 108 037 907 A (UNIV TAIYUAN TECHNOLOGY) 15 May 2018 (2018-05-15) * figure 2 * * paragraph [0022] * * paragraph [0037] * ----- | 1-15 | TECHNICAL FIELDS SEARCHED (IPC) G06F H04L G01J |
| A | US 2019/278567 A1 (HAN SANG WOOK [KR] ET AL) 12 September 2019 (2019-09-12) * figure 3 * * paragraph [0010] * * paragraph [0022] * * paragraph [0065] - paragraph [0067] * ----- | 1-15 | |

The present search report has been drawn up for all claims

| Place of search | Date of completion of the search | Examiner |
|---|---|---|
| Munich | 3 May 2021 | Caragata, Daniel |

EPO FORM 1503 03.82 (P04C01)

**ANNEX TO THE EUROPEAN SEARCH REPORT
ON EUROPEAN PATENT APPLICATION NO.**

EP 20 21 4383

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2021

| Patent document cited in search report | | | Publication date | Patent family member(s) | | | Publication date |
|---|---|---|---|---|---|---|---|
| EP | 3399405 | A1 | 07-11-2018 | CN | 107615237 | A | 19-01-2018 |
| | | | | EP | 3399405 | A1 | 07-11-2018 |
| | | | | JP | 2019505860 | A | 28-02-2019 |
| | | | | KR | 101729663 | B1 | 24-04-2017 |
| | | | | US | 2018260192 | A1 | 13-09-2018 |
| | | | | WO | 2017116055 | A1 | 06-07-2017 |
| WO | 2020177848 | A1 | 10-09-2020 | NONE | | | |
| CN | 108037907 | A | 15-05-2018 | NONE | | | |
| US | 2019278567 | A1 | 12-09-2019 | KR | 20180034242 | A | 04-04-2018 |
| | | | | US | 2019278567 | A1 | 12-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180260192 A

**Non-patent literature cited in the description**

- **TURAN et al.** *Recommendation for the Entropy Sources Used for Random Bit Generation,* January 2018